# EUROPEAN PATENT APPLICATION

(11) **EP 4 407 540 A1**
(43) Date of publication of application: **31.07.2024**
(21) Application number: 23153607.9
(22) Date of filing: 27.01.2023
(51) Int. Cl.: G06Q 10/10, G06Q 30/04

(54) **INVOICE PROCESSING**

(71) Applicant: Sage Global Services Limited, Newcastle upon Tyne NE28 9EJ (GB)
(72) Inventor: LATIMER, Christopher Ian, Newcastle Upon Tyne, NE28 9EJ (GB); LELLOUCHE, Gal Isaac, Newcastle Upon Tyne, NE28 9EJ (GB)
(74) Representative: Definition IP Limited

(57) **Abstract**

Disclosed herein is a method of generating an invoice summary document from an invoice received by a recipient from a vendor. The invoice summary document for processing by an invoice processing system. The method comprises: receiving an electronic invoice image file, extracting text data from the electronic invoice image file, processing the extracted text data to identify: vendor identity and transaction details data, using the vendor identity to retrieve vendor characteristics data, inputting to a ML network: the vendor characteristics data; recipient characteristics data, transaction details data, and transaction classifier data associated with transaction classifiers potentially associated with the one or more transactions, outputting from the ML network estimates of which of the transaction classifiers are associated with the one or more transactions, and assembling the invoice document using the transaction details data and the transaction classifiers output from the ML network.

## Description

### Technical Field

The present invention relates to techniques for processing invoices.

### Background

Systems for assisting in the processing of invoice documents sent from a vendor and received by a customer are known. Such systems typically comprise some form of optical character recognition (OCR) technology which is used to recognise text data from an electronically scanned version of an invoice document. This recognised text is then used to automatically populate corresponding fields of a form provided by an invoice processing software application. Such fields include, for example, vendor identity, transaction date, invoice number, a description of the goods/services rendered (typically in the form of one or more "line items"), and monies owed.

Once completed and approved by a user, the data from such a form can then be processed by the invoice processing software application, for example by populating an invoice reconciliation list and then being added to an accounts payable ledger.

If such systems work well, then the amount of time spent manually overseeing the processing of invoices can be much reduced. However, typically such systems only recognise and produce text data relating to information provided on the scanned invoice document themselves.

However, other data is still necessary for a customer to process an invoice received from a vendor. For example, it is typically necessary to classify each transaction (for example each line item of an invoice) with a particular code (typically a general ledger code), so that the transaction in question can be recorded against the correct general ledger account. Using many conventional systems for automatic invoice processing, this type of additional information must typically be added manually during invoice processing.

### Summary of the Invention

In accordance with a first aspect of the invention there is provided a method of generating an invoice summary document from an invoice received by a recipient from a vendor, said invoice summary document for processing by an invoice processing system. The method comprises: receiving an electronic invoice image file corresponding to an image of an invoice relating to one or more transactions between the vendor and recipient; extracting text data from the electronic invoice image file. The method further comprises: processing the extracted text data to identify: vendor identity text data corresponding to a vendor identity associated with the vendor, and transaction details text data corresponding to details of one or more transactions with which the invoice is associated. The method further comprises: using the vendor identity to retrieve from data storage vendor characteristics data associated with characteristics of the vendor; inputting to a ML network: the vendor characteristics data, recipient characteristics data associated with characteristics of the recipient retrieved from data storage, the transaction details text data, and transaction classifier data associated with a plurality of transaction classifiers potentially associated with the one or more transactions. The ML network is trained to estimate which of the transaction classifiers are associated with the one or more transactions with which the invoice is associated. The method further comprises: outputting from the ML network estimates of which of the transaction classifiers are associated with the one or more transactions with which the invoice is associated, and assembling the invoice document using the transaction details text data and the one or more transaction classifiers output from the ML network.

Optionally, the method further comprises processing the extracted text data to identify invoice context-specific data relating to conditions associated with the issuing of the invoice; retrieving context-specific transaction classifier data associated with the identified invoice context-specific data, and including the context specific transaction classifier data in the transaction classifier data input to the ML network.

Optionally, the context-specific data relates to an identity of the vendor.

Optionally, the method further comprises extracting the text data from the electronic invoice image file using an optical character recognition (OCR) technique.

Optionally, the method further comprises determining if the electronic invoice image file includes embedded text data, and if so extracting the text data from the embedded text data.

Optionally, the method further comprises assembling the invoice document using transaction classifiers output from the ML network only if the ML network estimates the transaction classifiers are associated with the one or more transactions with an above-threshold degree of certainty.

Optionally, the method further comprises communicating the invoice document to a client application for further processing by an invoice processing function.

Optionally, the method further comprises receiving feedback data from the client application corresponding to changes made by a user to the invoice document, and modifying the ML network in accordance with the feedback data.

Optionally, the transaction classifiers comprise general ledger (GL) codes.

Optionally, the transaction details text data corresponds to one or more line items of the invoice.

In accordance with a second aspect of the invention there is provided a computing system on which is running a computer program for generating an invoice summary document in accordance with the method of the first aspect.

In accordance with a third aspect of the invention there is provided a computer program which when run on a suitable computing system is configured to control the computing system to implement the method of the first aspect.

In accordance certain examples of the invention, a technique is provided in which an invoice can be automatically processed using a machine learning network to generate an invoice summary document. The invoice summary document is augmented in that it includes additional information necessary for processing the invoice that is not present on the invoice. Such information, which would otherwise have to be entered manually by a user, can include, for example, information classifying each line item on an invoice with a particular code such as a general ledger code so that the transaction in question can be recorded against the correct general ledger account.

Advantageously, this can reduce amount of time spent manually overseeing the processing of invoices. This can also improve the accuracy, completeness, and repeatability of invoice processing.

Advantageously, in accordance certain examples of the invention, the invoice summary document can be generated and displayed to a user via a suitable interface to allow the user to confirm, using the interface, if the invoice summary document is correct or to correct any errors. If the user makes corrections, feedback can be provided to the machine learning network. Advantageously, this can continuously improve the accuracy of predictions made by the machine learning network.

Various aspects and features of the invention are defined in the claims.

### Brief Description of the Drawings

Embodiments of the present invention will now be described by way of example only with reference to the accompanying drawings where like parts are provided with corresponding reference numerals and in which:
Figure 1 provides a schematic diagram depicting the functional components of a system for assisting in the processing of invoices arranged in accordance with certain embodiments of the invention;
Figure 2 provides a flow diagram depicting steps of a process performed by the system shown in Figure 1 to generate an invoice summary document;
Figure 3 provides a diagram depicting an illustrative example of an electronic invoice image of an invoice document and a corresponding illustrative example of an invoice summary document generated by an invoice summary document generating system in accordance with certain embodiments of the invention;
Figure 4 provides a simplified schematic diagram depicting a typical implementation of the system described with reference to Figure 1; and
Figure 5 provides a schematic diagram of a further system in accordance with certain embodiments of the invention.

### Detailed Description

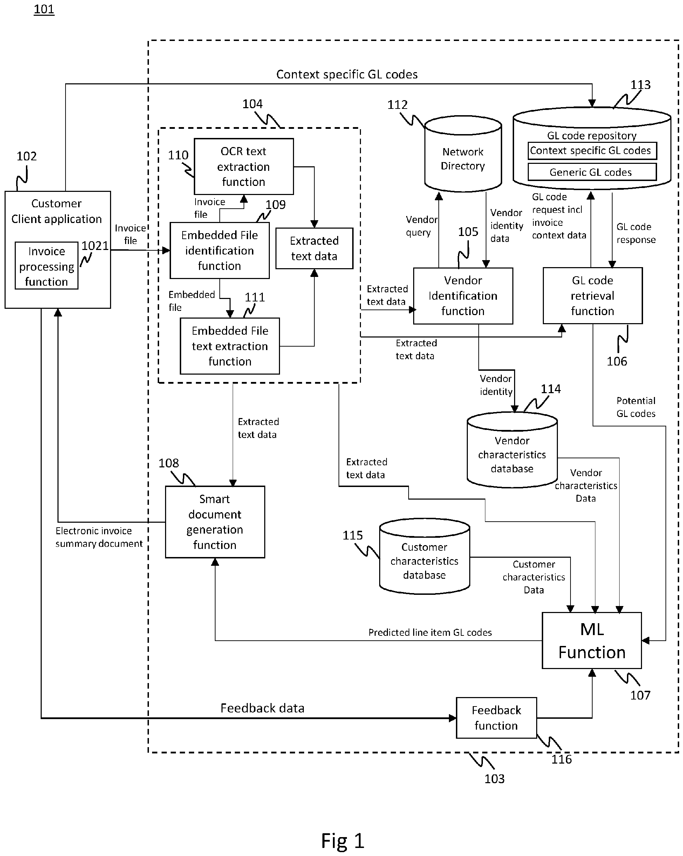

Figure 1 provides a schematic diagram depicting the functional components of a system 101 for assisting in the processing of invoices and which is arranged in accordance with certain embodiments of the invention.

The system 101 comprises a client application 102 which is communicatively connected to an invoice analysis system 103.

In typical examples, the client application 102 is software providing accounting data processing services to a user. These accounting data processing services include an invoice processing function 1021 for processing invoices received from vendors of whom the user (the invoice recipient) of the client application is a customer.

Often, these invoices are received from vendors in the form of a data file providing an electronic image of an invoice document (such as a portable document format (.pdf) file, or similar, attached to an email). As described in more detail below, in certain examples, such a file may sometimes include embedded text data as well as image data, where the text data corresponds to some or all of the text of the invoice.

The client application 102 is configured to communicate such electronic invoice image files to the invoice analysis system 103.

The invoice analysis system 103 is configured to use conventional OCR techniques (or direct text extraction from text data embedded in the invoice if provided) to extract from these electronic invoice image files text data corresponding to standard invoice information. This standard invoice information typically includes vendor identity, transaction date, invoice number, a description of the goods/services rendered (typically in the form of one or more "line items") and monies owed. This extracted text data is then used to populate an electronic invoice summary document.

The electronic invoice summary document is an electronic document comprising information from the invoice in a format that can be readily processed by the invoice processing function provided by the client application 102.

However, as well as populating the invoice summary document with text data directly extracted from the electronic invoice image files, the invoice analysis system 103 is also configured to generate, and then populate, the invoice summary document with additional invoice processing information. This additional invoice processing information is information required for the processing of the invoice but that is not typically included in the invoice itself. As described in more detail below, examples of this additional information include transaction classifiers (for example GL codes) which must typically be allocated to line items of the invoice for the invoice to be properly processed. In conventional systems, such additional information is normally added manually by a user during invoice processing.

In accordance with embodiments of the invention, this additional invoice processing information is generated by a machine learning function which is trained to predict the additional invoice processing information (e.g. GL codes), most likely to be associated with the transaction of the invoice based on characteristic data associated with characteristics of the vendor and characteristics of the customer.

Once the invoice analysis system 103 has populated an invoice summary document with the standard invoice information and the additional invoice information, the invoice analysis system 103 then communicates the invoice summary document to the client application 102.

Once returned to the client application 102, the invoice summary document is displayed to a user via a suitable interface. The user is able to confirm, using the interface, that the information with which the invoice document is populated is correct (or change or correct any errors/inaccuracies).

Once this is done, the information included in the invoice summary document (which has been confirmed to be correct by the user) is then processed by the invoice processing function (for example by being passed to an invoice reconciliation list and then added to an accounts payable ledger and so on).

Referring to Figure 1, the invoice analysis system 103 comprises a text extraction function 104, a vendor identification function 105; a GL code retrieval function 106, an ML function 107 and an invoice summary document assembling function 108.

The text extraction function 104 further comprises an embedded file identification function 109, an OCR text extraction function 110 and an embedded file text extraction function 111.

The vendor identification function 105 is communicatively connected to a network directory 112.

The GL code retrieval function 106 is communicatively connected to a GL code repository 113.

The vendor identification function 105, the GL code retrieval function 106, the ML function 107 and the smart document generating function 108 are configured to receive extracted text data output from the text extraction function 104.

The network directory 112 is typically provided by a searchable database which contains data records of vendor identities of vendors who are known to supply the user. These vendor identity data records can be generated by the relevant vendor identity data being entered by a user of the client application 102 and communicated to the network directory 112 from the client application 102, or by a user of the client application selecting a vendor identity from a list of known vendors (provided by the invoice analysis system 103) and such a selection being communicated to the network directory 112 from the client application 102.

The GL code repository 113 comprises transaction classification data records corresponding to transaction classifiers (GL codes) used to classify particular transactions between customers and vendors.

A "transaction" typically refers to the purchase from the vendor by the customer of a particular good or service that appears on an invoice as a "line item".

During conventional invoice processing, a GL code is typically allocated to each line item of an invoice. In this way, each transaction specified on an invoice is classified as being associated with a particular GL code.

As can be seen from Figure 1, the transaction classification data records stored in the GL code repository 113 comprise data records associated with two classes of GL codes: generic GL codes and context-specific GL codes.

Generic GL code data records are data records relating to GL codes that are associated with transactions that commonly occur between all types of vendors and customers and typically are not specific to a given vendor/customer relationship.

On the other hand, context-specific GL code data records are data records relating to GL codes that are known to be relevant to particular conditions associated with the issuing of the invoice and where those particular conditions can be inferred from additional context-specific information extracted from the invoice.

Examples of conditions associated with the issuing of an invoice include one or more of the particular vendor; a particular person (for example a vendor employee who issued the invoice); a particular location (for example the location of the vendor); a particular list item; a particular date (for example the specific date an invoice was issued on) and so on. Accordingly, examples of additional invoice context-specific information that can be extracted from the invoice include text data corresponding to a vendor identity; text data corresponding to a person identity; text data corresponding to a list item identity; text data corresponding to a location identity and so on.

The context-specific GL code data records can be generated in any suitable way. For example, context-specific GL codes can be generated by GL codes and additional context-specific information being entered by a user of the client application 102 to form one or more context-specific GL codes data records which are then communicated from the client application 102 to the GL code repository 113.

The ML function 107 is further communicatively connected to the vendor-characteristics data database 114 and a customer-characteristics data database 115. The vendor-characteristics data database 114 is a database of data records which provide further data relating to characteristics of various vendors. Such characteristics might include market segment, annual turnover, geographical location, number of employees, length of time operating and so on. The vendor-characteristics data database 114 is connected to the vendor identification function 105.

The customer-characteristics data database 115 is a database of data records which provide further data relating to characteristics of the customer associated with the client application 102. Again, such characteristics might include market segment, annual turnover, geographical location, number of employees, length of time operating and so on.

The ML function 107 is a machine learning network that comprises one or more trained neural networks.

In a typical example, the ML function 107 is configured to receive as input invoice data, extracted text data corresponding to each line item; a number of GL codes with which each line item may potentially be associated; vendor characteristic data associated with characteristics of the vendor who issued the invoice, and customer characteristic data associated with characteristics of the customer to whom the invoice was issued.

From this input data, the ML function 107 is trained to output an estimate of which of the input GL codes each line item is associated with. The ML network is also configured to output a confidence score associated with each estimate. The confidence score can be expressed as a percentage. The confidence score provides an indication of the reliability of the estimate.

The invoice summary document assembling function 108 receives extracted text data from the text extraction function 104 and maps this text to relevant fields of the invoice summary document. This can be done using any suitable text recognition technique as are well known in the art. The invoice summary document assembling function 108 receives the predicted line item GL codes from the ML function 107 and incorporates them into the invoice summary document.

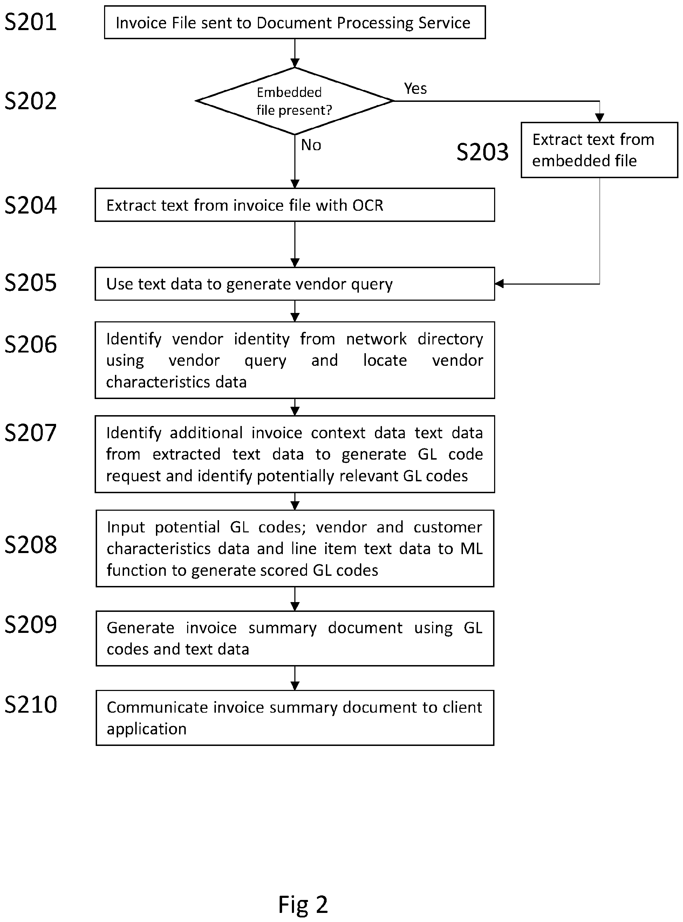

Figure 2 provides a flow diagram depicting steps of a process performed by the system 101 to generate an invoice summary document.

At a first step S201, the client application 102 is configured to send an invoice file to the text extraction function 104. The invoice file typically comprises image data providing an electronic invoice image of an invoice document sent from the vendor to the customer. In certain examples, the invoice file may further include an embedded text file which provides text data relating to some or all of the text on the invoice document.

At a second step S202, the embedded file identification function 109 of the text extraction function 104 is configured to determine whether or not the invoice file includes an embedded text file.

If the embedded file identification function 109 determines that the invoice file does include an embedded text file, then the embedded file identification function 109 communicates the invoice file to the embedded file text extraction function 111 which, at a third step S203, extracts the text data from the embedded text file.

On the other hand, if the embedded file identification function 109 determines that the invoice file does not include an embedded text file, then the embedded file identification function 109 communicates the invoice file to the OCR text extraction function 110 which, at a fourth step S204 scans the electronic invoice image from the invoice file using an OCR process to recognise text therein and generate corresponding extracted text data.

Text data from either the OCR text extraction function 110 or embedded file text extraction function 111 is then output from the text extraction function 104. As can be seen from Figure 1, the extracted text data is output to the vendor identification function 105, the GL code retrieval function 106, the ML function 107 and the invoice summary document assembling function 108.

At a fifth step S205, the vendor identification function 105 is configured to process the extracted text data received from the text extraction function 104 to generate a vendor query. At this step, the vendor identification function 105 identifies specific text from the text data that might correspond to the vendor's name. This can be done using any suitable technique, for example by searching the text data for words or combinations of words that match with or closely correspond with the names of known vendors. The vendor query is then typically communicated to the network directory 112.

At a sixth step S206 a matching process is performed where the vendor data records stored in the network directory 112 are searched to determine if there is a vendor identity that matches any of the text from the vendor query.

If there is such a match, then the identified vendor identity data is communicated from the network directory 112 to the vendor identification function 105. The vendor identification function 105 is then configured to communicate the vendor identity data to the vendor-characteristics data database 114 which locates corresponding vendor-characteristics data associated with the vendor and, as described below, communicates this to the ML function 107.

At a seventh step S207, the GL code retrieval function 106 generates a GL code request and communicates this to the GL code repository 113. To do this, the GL code retrieval function 106 is configured to process the extracted text data received from the text extraction function 104 to identify additional context specific information. This can be done using any suitable technique, for example by searching the text data for words or combinations of words that match or closely correspond with the names of known context-specific information. As described, such context-specific information can include, for example, a particular vendor; a particular person (for example a vendor employee who issued the invoice); a particular location (for example the location of the vendor); a particular list item; a particular date (for example the specific date an invoice was issued on).

If the GL code retrieval function 106 identifies such additional invoice context information, this is included in the GL code request in the form of additional invoice context data.

On receipt of the GL code request, the GL code repository 113 is searched for data records relating to GL codes associated with the additional invoice context data included with the GL code request.

The GL code repository 113 then generates a GL code response which includes all the context specific GL codes identified as being associated with the context-specific information and all of the generic GL codes stored in the GL code repository 113. As will be understood, this group of GL codes corresponds to all the GL codes from the GL code repository 113 that are potentially relevant to the line items specified on the invoice.

At an eighth step S208, all the GL codes retrieved by the GL code retrieval function 106, the vendor characteristics data from the vendor-characteristics data database 114, the customer characteristics data from the customer-characteristics data database 115 and the extracted text data are input to the ML function 107.

The ML function 107 is then configured to pre-process the received data. This pre-processing typically includes identifying from the text data, text data relating to specific line items (this can be done using any suitable technique, for example by searching the text data for words or combinations of words that match with or closely correspond with known line item text data) and then, for example, vectorising this data along with the other input data (the vendor characteristics data, the customer characteristics data and the potential GL codes). This processed data is then passed through the neural networks of the ML function 107.

The ML function 107 outputs one or more predicted line-item GL codes. Each output predicted line-item GL code is a prediction of which GL code, from the input GL code data received from the GL code retrieval function 106, is associated with each line item identified from the extracted text data.

Each predicted line-item GL code output by the ML function 107 is associated with a confidence score. The confidence score corresponds to a degree of confidence associated with the prediction. If the ML function 107 predicts, with high degree of certainty that a particular GL code is associated with a particular line item, then the confidence score will be a higher value. If the ML function 107 predicts, with lower degree of certainty that a particular GL code is associated with a particular line item, then the confidence score will be a lower value.

Each predicted line-item GL code output from the ML function 107, along with the corresponding confidence score, is communicated to the invoice summary document assembling function 108.

At a ninth step S209, the invoice summary document assembling function 108 assembles the invoice summary document using the extracted text data from the text extraction function 104 mapped to the relevant fields of the invoice summary document and the one or more predicted line-item GL codes from the ML function 107.

In typical examples, the invoice summary document assembling function 108 will only include a predicted line-item GL code in the invoice summary document if the confidence score generated by the ML function 107 exceeds a predetermined minimum threshold.

At a tenth step S210, the invoice summary document, so generated, is communicated from the invoice analysis system 103 to the client application 102.

It will be understood that in certain embodiments, the system 101 can include one or more further machine learning networks operable to perform certain operations described above such as identifying a vendor identity from a vendor query and/or identifying generic and/or context specific GL codes from a GL code request.

For example, in certain embodiments the system 101 comprises a vendor matching ML network, and the vendor identification function 105 is configured to send the vendor query to the vendor matching ML network, and to receive vendor identity data from said ML network.

As a further example, in certain embodiments the system 101 comprises a GL code-identifying ML network, and the GL code retrieval function is configured to send the GL code request to the GL code-identifying ML network, and to receive a GL code response from said ML network.

The further ML networks (e.g. the vendor matching ML network and the GL code-identifying ML network) are pre-trained based on suitable training data. In certain embodiments, the vendor matching ML network is trained based on customer-specific data. In certain embodiments, the GL code-identifying ML network is trained based on a combination of generic and customer-specific data.

In embodiments that include a vendor matching ML network and/or a GL code-identifying ML network, typically the feedback function 116 is configured to receive feedback from a user relating to the correct vendor identity or correct GL codes associated with line items of the invoice and to generate corresponding feedback data for updating the respective networks to take account of the corrections made by the user and thereby improve the accuracy of future predictions.

In certain embodiments, the vendor matching ML network is specific to a particular customer. In this way, the network represents the vendors that the customer transacts with. Typically, the vendor matching ML network is re-trained every time feedback is received from a user via the feedback function (for example to ensure new vendors can be added in real time).

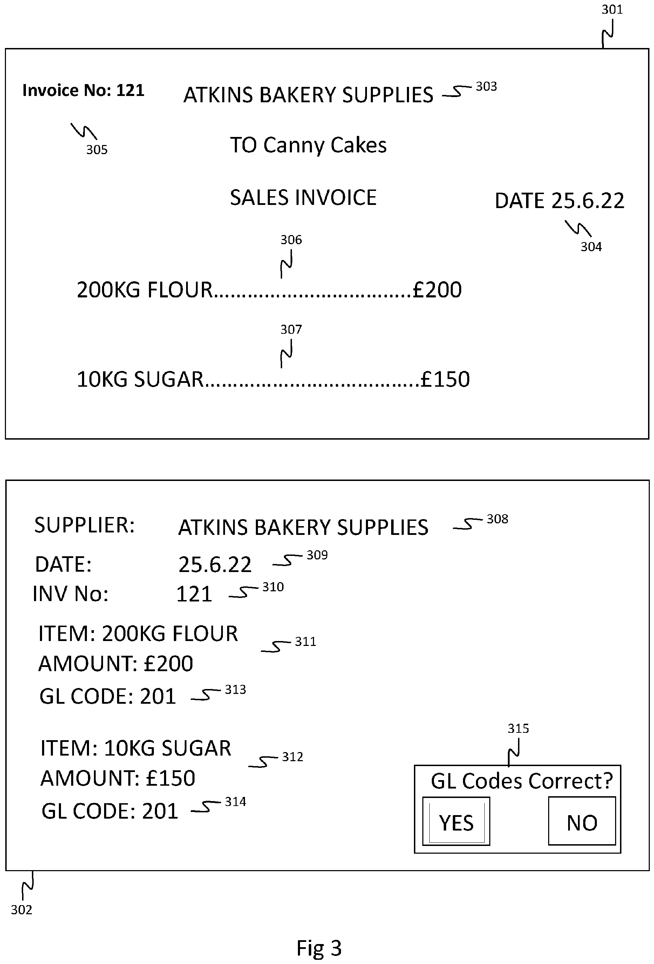

Figure 3 provides a diagram depicting an illustrative example of an electronic invoice image of an invoice document 301 and a corresponding illustrative example of an invoice summary document 302 generated by the invoice analysis system 103 and as it would be displayed to a user of the client application 102 on a suitable interface provided by the client application 102.

As can be seen from Figure 3, the invoice document 301 comprises first text 303 identifying the vendor ("Atkins Bakery Supplies"), second text 304 identifying a date of the transaction, third text 305 identifying an invoice number, fourth text 306 identifying a first invoice line-item (the purchase of 200Kg of flour) and fifth text 307 identifying a second invoice line-item (the purchase of 10Kg of sugar).

As described above, text data relating to the first text 303, second text 304, third text 305, fourth text 306 and fifth text 307 is communicated to the invoice summary document assembling function 108 from the text extraction function 104. The invoice summary document assembling function 108 is configured to recognise which fields of the invoice summary document 302 the text data relates to and populate the invoice summary document 302 accordingly.

For example, the invoice summary document assembling function 108 is configured to recognise that the text data relating to the first text 303 should be inserted in a first field 308 relating to the vendor who issued the invoice; that the text data relating to the second text 304 should be inserted in a second field 309 relating to date the invoice, that the text data relating to the third text data 305 should be inserted in a third field 310 relating to the invoice number and that the text data relating to the fourth text 306 and fifth text 307 should be inserted respectively in a fourth field 311 and fifth field 312 respectively relating to narratives associated with the two invoice line-items.

As can be seen from Figure 3, the invoice summary document assembling function 108 is then configured to populate the invoice summary document 302 accordingly.

As can be seen from Figure 3, the invoice summary document 302 further comprises a sixth field 313 and a seventh field 314 which relate to a GL code associated with the first invoice line-item and second invoice line-item respectively.

The text inserted in the fifth field 312 and a sixth field 313 is derived from the predicted line-item GL codes received from the ML function 107.

In this example, the predicted line-item GL code for both invoice line-items is "201" which in the case of the customer may relate, for example, to bulk raw ingredients purchasing.

Typically, once received by the client application 102, the completed invoice summary document 302 is displayed to the user of the client application 102 to approve. An example of this is shown in Figure 3.

As can be seen in Figure 3, the invoice summary document 302 displayed to the user with a graphical element 315 that the user can select to either approve or reject the invoice summary document. In the event that the user selects the graphical element 315 to approve the invoice data shown on the invoice summary document 302 (for example by selecting the "YES" option of the graphical element 315), then the invoice data embedded in the invoice summary document 302 is forwarded for processing to the invoice processing function of the client application 102.

However, in the event that the user selects the graphical element 315 to rejects the invoice data shown on the invoice summary document 302 (for example by selecting the "NO" option of the graphical element 315), then the client application 102 is configured to prompt the user to amend the invoice data shown on the invoice summary document 302 to make any necessary corrections. When the user has confirmed that they have done this (for example by selecting an appropriate graphical element, for example a graphical element stating "UPDATE INVOICE DATA"), then the amended invoice data is forwarded for processing to the invoice processing function of the client application 102.

However, as shown in Figure 1, the client application 102 is also configured to return the amended invoice data to a feedback function 116. The feedback function 116 is configured to compare the predicted line item GL codes output from the ML function 107 with those in the amended invoice data to identify any line item GL codes changed by the user (and thus incorrectly predicted by the ML function 107).

The feedback function 116 then generates feedback data for updating the ML function 107 which when applied to the ML function 107 adapts the ML function 107 to take account of the corrections made by the user and thereby improving the accuracy of future line item GL code predictions.

In certain embodiments, the format of the invoice summary document 302 complies with a standardised financial document format such as universal business language (UBL) 2.1. This can improve compatibility of the invoice summary document 302 with different invoice processing systems.

The system 101 described with reference to Figure 1 can be implemented in any suitable way.

Typically, the client application 102 runs on user computer system with a suitable data network connection, for example a personal computing device such as personal computer, tablet, smartphone or other smart device. The client application 102 can be locally installed software or can be accessed via web interface. Functions provided by the client application 102 (e.g. the accounting data processing services including the invoice processing function) can be locally installed, or run on one or more remote servers (for example as a web application servers) and accessed via client application.

The invoice analysis system 103 typically run as server-side software application running on one or more co-located physical server computer systems connected to the user computing device via a suitable data connection. Alternatively, the invoice analysis system 103 may be implemented "virtually" by being run in a distributed manner across several different server computer systems using known "cloud-computing" techniques.

Components of the invoice analysis system 103, namely the text extraction function 104, vendor identification function 105, GL code retrieval function 106, ML function 107 and invoice summary document assembling function 108 and the network directory 112, GL code repository 113, vendor-characteristics data database 114 and customer-characteristics data database 115 can be manifested in any suitable way. For example, these components may be manifested as a single software application that may, or may not, include further additional functionality, or the functionality associated with these components may be manifested across two or more distinct software applications that may, or may not, include further additional functionality.

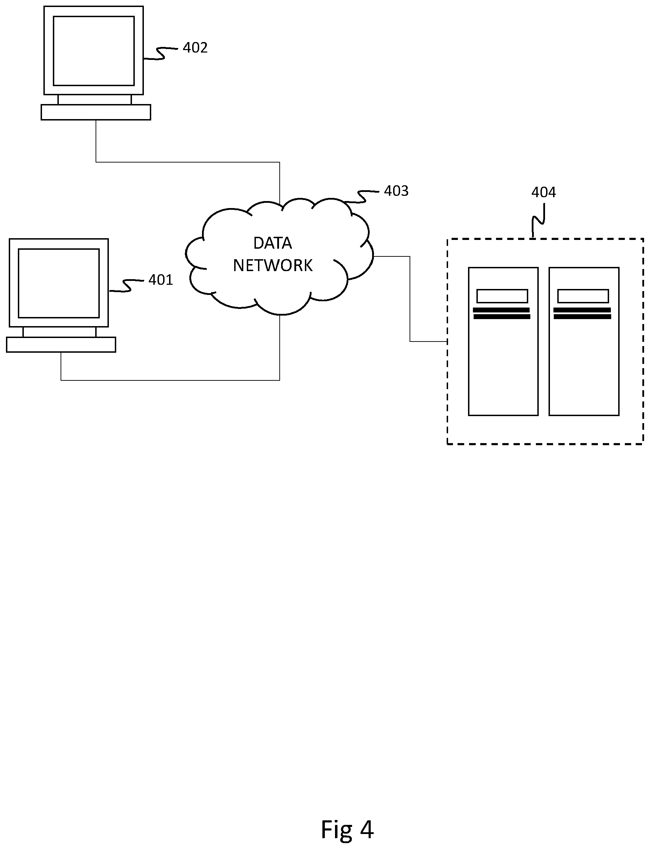

Figure 4 provides a simplified schematic diagram depicting a typical implementation of the system 101 described above. A user computing device 401 associated with the customer is connected to a similar user computing device 402 associated with the vendor via a data network 403 (typically the internet). An application server system 404 is also connected to the data network 403.

The user computing device 401 has running thereon software providing the client application 102 as described above, and the application server system 404 has running thereon software providing the invoice analysis system 103 as described above. In use, a user of the vendor computing device 402 uses software (typically an email client) running thereon to send an electronic version of an invoice document to the customer computing device 401. Using suitable software (typically an email client), this electronic version of the invoice document is received at the customer computing device 401, extracted and input to the client application 102. The client application 102 then controls the customer computing device 401 to communicate an electronic invoice image to the invoice analysis system 103 running on the application server system 404 via the data network 403. The invoice analysis system 103 running on the application server system 404 then generates a corresponding invoice summary document and communicates this back to the customer computing device 401 via the data network 403 which, if approved by a user, is then processed by the invoice processing function provided by the client application 102.

In the example described above, the electronic invoice file is communicated from the client application 102 to the invoice analysis system 103. Typically, the client application 102 and the invoice analysis system 103 have a pre-established relationship (for example the invoice analysis system 103 is accessed as a service from the client application 102). When the client application 102 is first instantiated it is linked with a particular user who is associated with a particular customer identity (stored in the network directory 112). Consequently, the invoice analysis system 103 can infer that data received from a given client application 102, and in particular a given electronic invoice file, is associated with a given customer identity. The customer identity, inferred in this way, is used to identify the relevant customer characteristics data to be retrieved from the customer-characteristics data database 115 and communicated to the ML function 107.

However, in other examples, the electronic invoice file may not be received from a given client application 102 and therefore, it may not be possible to immediately infer the customer identity of the recipient of the invoice. In particular, in certain examples, the electronic invoice file may be sent from the system associated with a vendor rather than from the customer. In such examples, typically the electronic invoice file will be sent from a vendor to the invoice analysis system 103 in form of an email with the electronic invoice file attached.

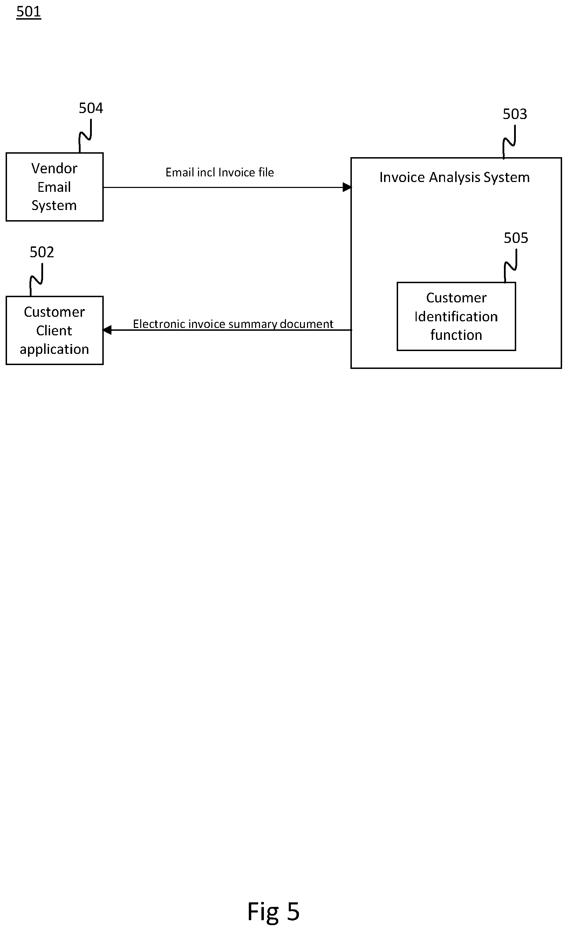

Figure 5 provides a schematic diagram of such a system 501.

In keeping with the system 101 described with reference to Figure 1, the system 501 shown in Figure 5 includes a customer client application 502 and an invoice analysis system 503. The customer client application 502 and invoice analysis system 503 operate in the same way as the client application 102 and invoice analysis system 103 described above.

The system 501 further includes a vendor email system 504 which is configured to communicate electronic invoice files to the invoice analysis system 503 as attachments to emails. To process electronic invoice files received in this way, the invoice analysis system 503 further comprises a customer identification function 505 which is configured to analyse the email from the vendor email system 504 to determine the customer identity of the user associated with the customer client application 502. The customer identification function 505 can achieve this in any suitable way.

In one example, it is configured to analyse the email received from the vendor email system 504 (for example analysing the "subject header" of the email and or text content of the email) to identify text data revealing the customer identity of the customer for whom the invoice is intended. Along with the vendor identity identified as described above (or, for example identified by analysing an email address from which the email was sent), the customer identity is used to generate the GL code request which is used to retrieve the relevant GL codes from the GL code database for input to the machine learning network. Similarly, the customer identity is used to retrieve the relevant customer characteristics data to be retrieved from the customer characteristics database of the invoice analysis system 503.

The invoice analysis system 503 then operates as described above to generate an electronic invoice summary document which is then communicated to the customer client application 502.

In further embodiments, rather than the GL code retrieval function 106 retrieving context-specific GL codes and general GL codes from the GL code repository 113 and forwarding them to the ML function 107, the GL code retrieval function 106 instead simply retrieves all of the GL codes in the GL code repository 113 and forwards them all to the ML function 107.

All of the features disclosed in this specification (including any accompanying claims, abstract and drawings), and/or all of the steps of any method or process so disclosed, may be combined in any combination, except combinations where at least some of such features and/or steps are mutually exclusive. Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations).

It will be appreciated that various embodiments of the present disclosure have been described herein for purposes of illustration, and that various modifications may be made without departing from the scope of the present disclosure. Accordingly, the various embodiments disclosed herein are not intended to be limiting, with the true scope being indicated by the following claims.

## Claims

1. A method of generating an invoice summary document from an invoice received by a recipient from a vendor, said invoice summary document for processing by an invoice processing system, said method comprising:
receiving an electronic invoice image file corresponding to an image of an invoice relating to one or more transactions between the vendor and recipient;
extracting text data from the electronic invoice image file;
processing the extracted text data to identify:
vendor identity text data corresponding to a vendor identity associated with the vendor, and
transaction details text data corresponding to details of one or more transactions with which the invoice is associated;
using the vendor identity to retrieve from data storage vendor characteristics data associated with characteristics of the vendor;
inputting to a ML network:
the vendor characteristics data,
recipient characteristics data associated with characteristics of the recipient retrieved from data storage,
the transaction details text data, and
transaction classifier data associated with a plurality of transaction classifiers
potentially associated with the one or more transactions, wherein
said ML network trained to estimate which of the transaction classifiers are associated with the one or more transactions with which the invoice is associated;
outputting from the ML network estimates of which of the transaction classifiers are associated with the one or more transactions with which the invoice is associated, and
assembling the invoice document using the transaction details text data and the one or more transaction classifiers output from the ML network.

2. A method according to claim 1, further comprising
processing the extracted text data to identify invoice context-specific data relating to conditions associated with the issuing of the invoice;
retrieving context-specific transaction classifier data associated with the identified invoice context-specific data, and
including the context specific transaction classifier data in the transaction classifier data input to the ML network.

3. A method according to claim 2, wherein the context-specific data relates to an identity of the vendor.

4. A method according to any previous claim, comprising extracting the text data from the electronic invoice image file using an optical character recognition (OCR) technique.

5. A method according to any previous claim, further comprising:
determining if the electronic invoice image file includes embedded text data, and if so extracting the text data from the embedded text data.

6. A method according to any previous claim, further comprising
assembling the invoice document using transaction classifiers output from the ML network only if the ML network estimates the transaction classifiers are associated with the one or more transactions with an above-threshold degree of certainty.

7. A method according to any previous claim, further comprising:
communicating the invoice document to a client application for further processing by an invoice processing function.

8. A method according to claim 7, further comprising receiving feedback data from the client application corresponding to changes made by a user to the invoice document, and
modifying the ML network in accordance with the feedback data.

9. A method according to any previous claim, wherein the transaction classifiers comprise general ledger (GL) codes.

10. A method according to any previous claim, wherein the transaction details text data corresponds to one or more line items of the invoice.

11. A computing system on which is running a computer program for generating an invoice summary document in accordance with the method of any previous claim.

12. A computer program which when run on a suitable computing system is configured to control the computing system to implement the method of any of claims 1 to 10.
